# EUROPEAN PATENT APPLICATION

(11) **EP 4 756 400 A1**
(43) Date of publication of application: **10.06.2026**
(21) Application number: 24217105.6
(22) Date of filing: 03.12.2024
(51) Int. Cl.: G01N 1/28, G01N 1/36, G01N 1/42

(54) **METHOD AND APPARATUS FOR PREPARING SAMPLES FOR CRYO-ELECTRON MICROSCOPY**

(71) Applicant: Universität Hamburg KöR, 20148 Hamburg (DE); Deutsches Elektronen-Synchrotron DESY, 22607 Hamburg (DE); Leibniz-Institut für Virologie, 20251 Hamburg (DE)
(72) Inventor: Seuring, Carolin, 22587 Hamburg (DE); Laugks, Tim, 22869 Schenefeld (DE); Banari, Amir, 20535 Hamburg (DE); Samanta, Amit, 22549 Hamburg (DE); Sasa, Bajt, 22609 Hamburg (DE); Grünewald, Kay, 22607 Hamburg (DE); Chapman, Henry, Hamburg (DE); Küpper, Jochen, 22869 Schenefeld (DE); Oberthür, Dominik, 22549 Hamburg (DE)
(74) Representative: Schmelcher, Thilo

(57) **Abstract**

The invention relates to an Apparatus and a Method for preparing samples for electron cryomicroscopy, the method comprising the steps of:
• Placing (100) a specimen holder (H) within a vacuum chamber (C),
• Generating (200) a vacuum inside the vacuum chamber (C),
• Cooling (300) the specimen holder (H) to a temperature such that an ejected sample could vitrify on the specimen holder (H),
• Using the nozzle (N) to eject (400) a sample towards the specimen holder (H), whereby while ejecting the specimen holder (H) and / or the nozzle (N) is /are moved relative to each other such that the resulting relative movement of the specimen holder (H) with respect to the nozzle (N) changes the distance between the nozzle (N) and the specimen holder (H) as well as providing for a movement in a plane normal to the distance of the nozzle (N) relative to the specimen holder (H), such that the impacting points of the ejected sample lead to non-overlapping impact points of vitrified samples on the specimen holder (H).

## Description

The invention relates to a Method as well as to an Apparatus for preparing biological samples for electron cryo-microscopy.

### Background

The invention is in particular related while not being limited to the field of experimental structural biology used to determine 3D structural models through structural methods such as X-ray crystallography or electron cryo-microscopy (cryo-EM) and focused on improvements in cryo-EM sample preparation with the goal to trap microsecond conformational dynamics.

Typically, a standard cryo-EM specimen is a perforated carbon film with biomolecules vitrified in a circa 200-500 nanometer thick layer of ice. The film is stabilized on a three millimeter standardized support mesh, named the cryo-EM grid, usually made of copper or gold. Sample vitrification is achieved by placing a few microliters of sample solution onto the cryo-EM grid, blotting the excess liquid, and immediately plunge-freezing the specimen into a cryogen. Despite the remarkable number of high-resolution structures that have been determined from a cryo-specimen, there are a few disadvantages that come with the process of vitrification.

First, vitrification itself is a rather slow process, including sample deposition and blotting, as well as immersion of the sample into the cryogen. Despite large efforts, shortening the vitrification time to less than Δt=20 ms has been the main challenge for cryo-EM sample preparation. Subsequently, all information of conformational changes is missed between the Δt intervals, leading to an incomplete understanding of the biomolecule's structure and function on time-scales faster than 20 ms.

Second, as macromolecules are embedded in a thin layer of ice, they are necessarily in contact with three interfaces that can affect the observed structure: the air-water, grid-water, and support film-water interfaces may lead to partial sample denaturation, or aggregation.

Third, triggering dynamics in an icelayer requires sample-melting, which may cause denaturation, and unwanted side-effects.

In recent years, new sample preparation methods have been developed-and partially commercialized-to address some of the limitations of conventional cryo-EM sample preparation. These advanced techniques eliminate the blotting step, enhance control over the vitrification process, and reduce the required sample volume. Furthermore, mixing and pump-trigger mechanisms have been integrated into the workflow.

While progress has been made, achieving improved time resolution-particularly on the microsecond time scale, which is critical for many biological processes-remains an unresolved challenge.

In the state of the art, particularly the US Patent US 10/866,172 B2 is known. The document shows a liquid sample being first applied to the sample holder and afterwards being processed in a shaping element (526) by means of a jet stream from the nozzles (shaping), whereby the 'shaping' can also include the mixing of the sample. The 'shaping' can take place before or during freezing, in the latter case the sample holder is cooled directly (with nitrogen).

The solution presented in prior art does not allow for precise time-resolution of the sample.

### Object of the invention

It is therefore an object of the invention to provide a method and an apparatus which allow for preparation of samples which allow for improved time-resolution.

The object is solved by a method according to claim 1 respectively an apparatus according to claim 16 detailed below. Further advantageous embodiments are subject to the dependent claims, the detailed description as well as to the figures.

### Short description of the figures

In the following the invention will be further detailed with reference to the figures. These figures show
- Fig. 1: a schematic view of embodiments of the invention at a first point in time,
- Fig. 2: a schematic view of embodiment of the invention at a later point in time, and

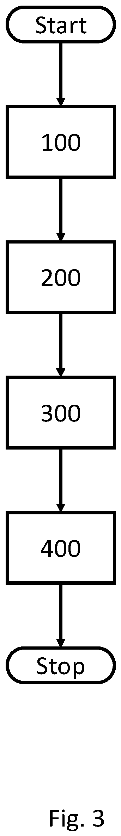

- Fig. 3: a schematic flow chart of steps of the invention.

### Detailed description of the invention

The present disclosure describes preferred embodiments with reference to the figures, in which like reference signs represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

The described features, structures, or characteristics of the invention may be combined in any suitable manner in one or more embodiments. In the description, numerous specific details are recited to provide a thorough understanding of embodiments of the invention. I.e., unless indicated as alternative, only a feature of an embodiment may also be utilized in another embodiment.

In addition, even though at some occurrences certain features will be described with reference to a single entity, such a description is for illustrative purpose only and actual implantations of the invention may also comprise one or more of these entities. I.e. usage of singular also encompasses plural entities unless indicated.

An exemplary embodiment will now be described with reference to the figure. It is to be noted that the sample may be of any kind, in particular a biological sample.

The invention also addresses another major bottleneck of the conventional cryo-EM specimen preparation, and the fact that the standard vitrification is a fairly slow process with two-rate limiting steps: blotting and plunge-freezing, which takes about 1-4 seconds, and 50 milliseconds, respectively.

As biological reactions are often faster than 50 milliseconds, the standard cryo-sample preparation is not suitable to investigate biological reactions, but primarily thermodynamically stable conformations that are not necessarily the active and functional states of a biomolecule.

According to embodiments of the invention a method for preparing (biological) samples for cryo-EM is provided.

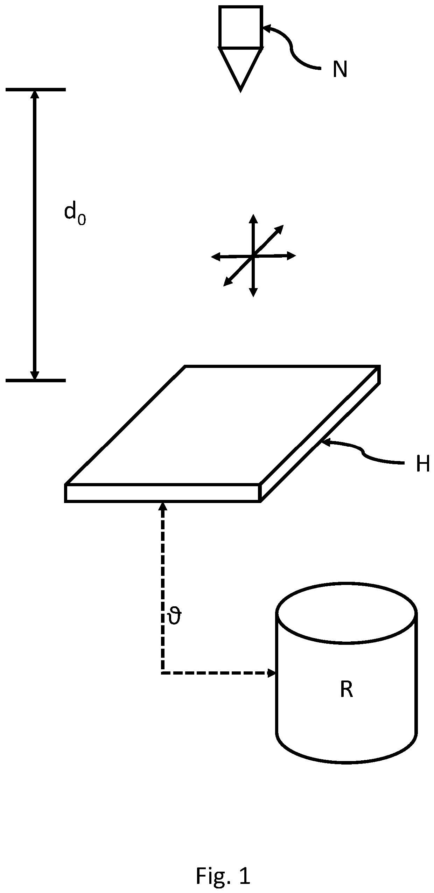

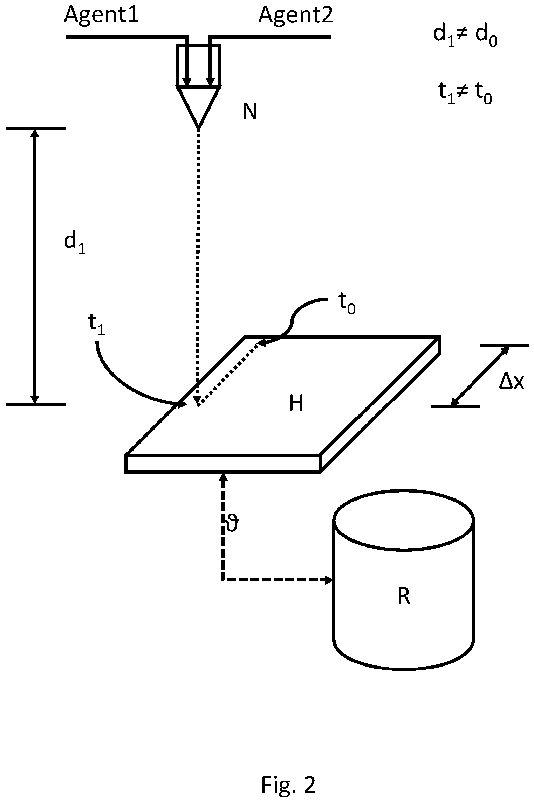

Some details of the apparatus are schematically illustrated in Figures 1 and 2. The method comprises a first step 100 of placing a specimen holder H within a vacuum chamber C (not shown). Figures 1 and 2 show schematically the interior of the vacuum chamber C.

The specimen holder H may be embodied as one or multiple autogrids. An autogrid consists of a cryo-EM grid mounted within a frame and secured with a C-clip, providing lateral support. Autogrids, also referred to as cartridges, are specifically designed and commercially available to facilitate easier handling, particularly during transfer into a microscope, and inside a microscope's autoloader. The cryo-EM grid itself is typically made from metallic materials such as gold, copper, or similar metals, and may comprise a carbonic film disposed thereon. In particular the specimen holder H may support six standard cryo-EM compatible support grids.

Afterwards in step 200 a vacuum inside the vacuum chamber C, e.g. via a conventional vacuum pump.

Prior to, while or after generating the vacuum inside the vacuum chamber C, the specimen holder H is cooled in step 300 to a temperature such that a later-on ejected sample could vitrify on the specimen holder H.

In particular, as the specimen holder H may be embodied as an autogrid, grid handling may be facilitated, because the grid can be mounted into the frame prior to cooling. Conventionally, the grid has to be clipped after vitrification. This minimizes the risk of damaging the grid during handling and transfer, and preserves sample integrity.

Once the specimen holder H offers the required temperature condition and pressure condition inside the vacuum chamber C, a nozzle N is used to eject in "a" step 400 a sample towards the specimen holder H. While ejecting the sample, the specimen holder H and / or the nozzle N is /are moved relative to each other such that the resulting relative movement of the specimen holder H with respect to the nozzle N changes the distance between the nozzle N and the specimen holder H as well as providing for a movement in a plane normal to the distance of the nozzle N relative to the specimen holder H, such that the impacting points of the ejected sample lead to non-overlapping impact points of vitrified samples on the specimen holder H.

It is to be noted that while above step 400 is indicated as "a" step, this step may include a continuous movement as well as a discontinuous movement such that individual samples pertaining to different distances are located at different locations on the specimen holder H.

It is noted that a different time resolution may also be achieved by varying the speed ejecting the sample. However, controlling the speed of ejecting a sample may be more complicated than maintaining a certain speed throughout ejecting sample material.

The process described is illustrated in Figures 1 and 2. In Figure 1, it is assumed that the apparatus is just about to initiate step 400. In Figure 2, it is illustrated that the process of step 400 has resulted in a trace of a sample on the specimen holder H, wherein the trace Δx, corresponds to samples associated with different time points. This is achieved, by moving the specimen holder H in time (at a constant rate) relative to the nozzle N, such that the distance between them increases over time. As the specimen holder H is (continuously) displaced in a plane perpendicular to the increasing distance, the resulting trace enables (continuous) time resolution of the sample.

By varying the parameters of the movement, the time point at which the sample is deposited on the specimen holder H can be precisely controlled. This allows different parts of the sample jet to be trapped on the specimen holder, and thereby capturing different states of the sample undergoing conformational changes. The invention overcomes limitations of current sample preparation techniques by enabling the preparation of cryo-EM specimens that trap a series of conformational states of biomolecules within the ice-layer, rather than a stable conformational state. To achieve this, the sample jet is deposited onto a pre-cooled cryo-EM grid in a vacuum, which eliminates contamination and increases cooling rates.

In an embodiment of the invention the relative movement of the specimen holder H with respect to the nozzle N is at least in part a continuous movement. Hence, a continuous sample deposition may be achieved allowing to analyze any point in time within the vitrified time-scale.

According to another embodiment, the cooling in step 300 may be provided by an external cooling unit. The cooling may be provided by a reservoir R containing liquified gas, such as liquified nitrogen gas. To simplify the set-up, the cooling may be provided by an (external) reservoir R and transferred into the vacuum chamber C via a metal-rod, such as a copper-rod, which cools the specimen holder H efficiently.

Even though the invention is not restricted to specific sample sizes, the target sizes can range from molecules to entire cells. The sample is ejected as a jet with a diameter of less than 10 micrometers, preferably less than 3 micrometer, preferably less than 2 micrometer, more preferably less than 1 micrometer, and may be even well below 100 nm. It is noted in this context that proteins offer a diameter of typically 2 - 6 nm, while agents like molecules or ligands are even smaller. Activating agents may be ions as small as 20g/mol.

Also, the ejected sample may comprise a diameter of more than 1 nanometer, or more than 100 nm, or more than 200 nm, or even more than 0.5 micrometer.

Even though the invention is not limited to a particular sample ejection speed, a sample may be ejected with a speed of more than 10 m/s, preferably more than 30 m/s. Also, a sample may be ejected with a speed of less than 300 m/s.

Likewise, the invention is not limited to a particular pressure within the chamber C when ejecting in step 400. Nevertheless, the vacuum chamber C may allow for creation of ultra-high vacuum conditions, in particular to allow for inside pressures of about 10⁻³ to 10⁻⁷ hPa.

The relative movement of the nozzle N and specimen holder H may be achieved in any manner. In particular, the relative movement of the specimen holder H with respect to the nozzle N may be generated by at least one motor placed inside the vacuum chamber C. Obviously by providing a respective drive arrangement one motor may provide for both movements. Also, different motors, in particular step-motors may be provided for generating respective movement patterns.

Likewise, the specimen holder H may also be moveable, e.g. in the x and y dimensions through the use of stepper motors.

It is to be noted that the drive(s) for the nozzle and/or the specimen holder H may be located inside the chamber C or outside the chamber C.

For example, the nozzle N may be movable by three piezoelectric motors, enabling precise movement in the x, y, and z directions with high precision well below micrometers. The precision of the piezoelectric motors allows for freezing samples at various points along the jet-axis, capturing a continuum of reaction states of the sample.

Also, the trace generated by the movement may be of any kind, e.g. it may be a continuous straight line or any other kind of trace including a spiral.

It is to be noted that the sample itself may comprise a mixture of at least two agents, A1 and A2. These agents may include, for example, a reactant and a biomolecule, which can be combined within the nozzle N, to initiate a reaction and induce conformational changes. Alternatively, an Agent A1 or a mixture of at least two Agents A1 and A2 may be activated / triggered within the nozzle N, for instance by exposure to light. This configuration provides flexibility for preparing samples under different experimental conditions enabling the study of different time-resolved processes

In an embodiment of the invention, the nozzle N may be a gas dynamic virtual nozzle producing a jet or a spray.

In a laboratory set-up a gas dynamic virtual nozzle N may be placed in a vacuum chamber C. As shown in Figure 2, reactants (liquid) Agent 1 and (liquid) Agent 2 may be mixed in the head of the nozzle N to initiate the reaction. The sample (in this case the mixed agents) is then focused by a high pressure gas to form a high speed jet. Based on the size of the tip of nozzle N, gas pressure and sample flow rate, a thin jet with a diameter of about 2 micrometers - 10 micrometers and a speed of about 30 m/s - 100 m/s may be generated. The liquid jet may carry biomolecules and may be directed towards a specimen holder H, e.g. a stabilized cryo-EM grid, which may be cooled to a low temperature around the liquid nitrogen temperature, e.g. based on a thermal conductor such as a metal-rod, e.g. a copper-rod indicated by ϑ being in contact with a thermal reservoir such as a liquid nitrogen (LN₂) container.

The high vacuum environment causes rapid evaporation along the jet axis, supporting fast cooling rates and vitrification once the jet touches the specimen holder H.

The vacuum conditions are also beneficial in preventing any condensation or contamination during sample deposition.

One of the main advantages of the "Jetfreezing" sample preparation is that by adjusting the distance d between the nozzle N and the specimen holder H, different time intervals of vitrification can be achieved, allowing for trapping of different conformational states of the biomolecules undergoing a reaction. I.e. when the process starts at t₀ according to Figure 1, a sample may be ejected corresponding to a flight time over distance d₀. At a later point in time t₁ another sample is deposited on the specimen holder H whereby the specimen holder has been displaced e.g. by Δx in the plane normal to the ejection direction and the specimen holder has been also displaced in the ejection direction such that the specimen holder H has now a distance of d₁ with respect to the nozzle N. That is, at this location the sample corresponds to a different flight time.

For the grid transfer out of vacuum, one may use a vacuum cryo transfer shuttle, which has a transfer arm capable of grasping the specimen holder H after sample deposition. The vacuum cryo transfer shuttle may also offer a small chamber filled with LN₂ for sample transfer. Also, the transfer arm may be in contact with a liquid nitrogen (LN₂) container and / or may be filled with LN₂ to keep the specimen holder H at the tip of the arm in a cryo condition. The vacuum cryo transfer shuttle may be easily docked to the vacuum chamber C and allows for s retracting the specimen holder H and transferring it to an external loading station for subsequent transfer to the electron microscope.

The invention allows for enhancing sample preparation in cryo-EM studies, particularly when time-resolution is a critical factor. It can be invaluable for unraveling the intricate mechanisms of protein-protein interactions, virus-host interactions, and interactions with ligands informing drug-design.

Additionally, its potential extends to the characterization of individual particles in X-ray Free Electron Laser (XFEL) studies, further expanding its applicability in structural biology and biophysics research.

The invention may be tailored for specific, time-resolved sample preparation requirements. It caters to scenarios, where understanding the dynamics of biomolecular interactions with a high degree of time resolution is crucial.

The invention allows to facilitate the trapping of single particles within XFEL experiments, enabling the study of sample integrity after exposure to an X-ray pulse or trigger and providing insights into radiation damage.

On the grid vitrification, bears the potential for capturing a continues ensemble of conformational states of biomolecules undergoing a reaction. Another advantage of the invention is the vacuum environment, ensuring contamination-free sample preparation. Furthermore, allowing to trap molecules in vacuum would be mutually beneficial to characterize sample jets in XFEL experiments.

## Claims

1. Method for preparing samples for electron cryo-microscopy, the method comprising the steps of:
• Placing (100) a specimen holder (H) within a vacuum chamber (C),
• Generating (200) a vacuum inside the vacuum chamber (C),
• Cooling (300) the specimen holder (H) to a temperature such that an ejected sample could vitrify on the specimen holder (H),
• Using the nozzle (N) to eject (400) a sample towards the specimen holder (H), whereby while ejecting the specimen holder (H) and / or the nozzle (N) is /are moved relative to each other such that the resulting relative movement of the specimen holder (H) with respect to the nozzle (N) changes the distance between the nozzle (N) and the specimen holder (H) as well as providing for a movement in a plane normal to the distance of the nozzle (N) relative to the specimen holder (H), such that the impacting points of the ejected sample lead to non-overlapping impact points of vitrified samples on the specimen holder (H).

2. Method according to claim 1, **characterized in that** the relative movement of the specimen holder (H) with respect to the nozzle (N) is at least in part a continuous movement.

3. Method according to claim 1 or 2, **characterized in that** cooling is provided by an external cooling unit.

4. Method according to one of the preceding claims, **characterized in that** cooling is provided by a reservoir of a liquefied gas, in particular for liquified nitrogen gas.

5. Method according to 4, **characterized in that** the cooling is provided by the reservoir and transported via a metal-rod extending into the vacuum chamber (C)

6. Method according to one of the preceding claims, **characterized in that** the relative movement of the specimen holder (H) with respect to the nozzle (N) is generated by at least one motor placed inside the vacuum chamber(C).

7. Method according to one of the preceding claims, wherein the sample comprises a mixture of at least two agents (A1, A2), or the sample comprises one agent and a trigger.

8. Method according to claim 7, wherein the mixture is prepared or activated through a trigger before being ejected.

9. Apparatus for preparing samples for electron cryo- microscopy, comprising:
• a vacuum chamber (C),
• a specimen holder (H),
• a cooling unit (R) for cooling the specimen holder (H) to a temperature such that an ejected sample could vitrify on the specimen holder (H),
• a nozzle (N) for ejecting a sample towards the specimen holder (H),
• and one or more drive units allowing for a relative movement of the nozzle (N) and the specimen holder (H) while using the nozzle (N) to eject a sample towards the specimen holder (H), whereby while ejecting the specimen holder (H) and / or the nozzle (N) is/are moved relative to each other such that the resulting relative movement of the specimen holder (H) with respect to the nozzle (N) changes the distance between the nozzle (N) and the specimen holder (H) as well as a providing for a movement in a plane normal to the distance of the nozzle (N) relative to the specimen holder (H), such that the impacting points of the ejected sample lead to non-overlapping impact points of vitrified samples on the specimen holder (H).

10. Apparatus according to claim 9, **characterized in that** the relative movement of the specimen holder (H) with respect to the nozzle (N) is at least in part a continuous movement.

11. Apparatus according to claim 9 or 10, **characterized in that** cooling is provided by an external cooling unit.

12. Apparatus according to one of the preceding claims 9 to 11, **characterized in that** cooling is provided by a reservoir of a liquefied gas, in particular for liquified nitrogen gas.

13. Apparatus according to claim 12, **characterized in that** the cooling is provided by the reservoir and transported via a copper-rod extending into the vacuum chamber (C).

14. Apparatus according to one of the preceding claims 9 to 13, **characterized in that** the relative movement of the specimen holder (H) with respect to the nozzle (N) is generated by at least one motor placed inside the vacuum chamber(C).

15. Apparatus according to one of the preceding claims 9 to 14, wherein the sample is a mixture of at least two agents (A1, A2).

16. Apparatus according to claim 15, wherein the mixture is prepared or activated through a trigger before being ejected.

17. Apparatus according to one of the preceding claims 9 to 16, **characterized in that** the nozzle (N) is a gas dynamic virtual nozzle.
